# EUROPEAN PATENT SPECIFICATION

(11) **EP 3 111 642 B1**
(45) Date of publication and mention of the grant of the patent: **12.05.2021**
(21) Application number: 15761586.5
(22) Date of filing: 11.03.2015
(51) Int. Cl.: H04N 19/105, H04N 19/70, H04N 19/597

(54) **METHOD AND APPARATUS OF SINGLE SAMPLE MODE FOR VIDEO CODING**
VERFAHREN UND VORRICHTUNG FÜR EINZELWERTMODUS IN DER VIDEOCODIERUNG
PROCÉDÉ ET APPAREIL DE MODE MONO-ÉCHANTILLON POUR CODAGE VIDÉO

(30) Priority: 11.03.2014 US 201461950929 P
(43) Date of publication of application: 04.01.2017
(73) Proprietor: HFI Innovation Inc., Zhubei City, Hsinchu County 302 (TW)
(72) Inventor: CHEN, Yi-Wen, Taichung City 420 (TW); LIN, Jian-Liang, Yilan County 270 (TW); SUN, Yu-Chen, Keelung City 204 (TW)
(74) Representative: Hoefer & Partner Patentanwälte mbB
(86) International application number: PCT/CN2015/073984
(87) International publication number: WO 2015/135473

(56) References cited:
- EP-A1- 3 158 744
- WO-A1-2013/159330
- WO-A1-2014/005248
- US-A1- 2013 335 522
- KARSTEN MULLER ET AL: "3D High-Efficiency Video Coding for Multi-View Video and Depth Data", IEEE TRANSACTIONS ON IMAGE PROCESSING, IEEE SERVICE CENTER, PISCATAWAY, NJ, US, vol. 22, no. 9, 1 September 2013 (2013-09-01), pages 3366-3378, XP011519698, ISSN: 1057-7149, DOI: 10.1109/TIP.2013.2264820
- MERKLE P ET AL: "3D video: Depth coding based on inter-component prediction of block partitions", 2012 PICTURE CODING SYMPOSIUM (PCS 2012) : KRAKOW, POLAND, 7 - 9 MAY 2012 ; [PROCEEDINGS], IEEE, PISCATAWAY, NJ, 7 May 2012 (2012-05-07), pages 149-152, XP032449850, DOI: 10.1109/PCS.2012.6213308 ISBN: 978-1-4577-2047-5
- Y-W CHEN ET AL: "3D-CE2: Single depth intra mode for 3D-HEVC", 9. JCT-3V MEETING; 3-7-3014 - 9-7-2014; SAPPORO; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-I0095, 26 June 2014 (2014-06-26) , XP030132396,
- Y-W CHEN ET AL: "Single depth intra mode for 3D-HEVC", 8. JCT-3V MEETING; 29-3-2014 - 4-4-2014; VALENCIA; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-H0087, 22 March 2014 (2014-03-22), XP030132147, DOI: 10.1109/ISCAS.2015.7168837
- LAI P ET AL: "Description of screen content coding technology proposal by MediaTek", 17. JCT-VC MEETING; 27-3-2014 - 4-4-2014; VALENCIA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Q0033-v4, 26 March 2014 (2014-03-26), XP030115920,
- Y-W CHEN ET AL: "Single color intra mode for screen content coding", 17. JCT-VC MEETING; 27-3-2014 - 4-4-2014; VALENCIA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Q0093-v3, 28 March 2014 (2014-03-28), XP030116004,
- COHEN R ET AL: "Description of screen content coding technology proposal by Mitsubishi Electric Corporation", 17. JCT-VC MEETING; 27-3-2014 - 4-4-2014; VALENCIA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-Q0036-v4, 28 March 2014 (2014-03-28), XP030115926,
- LAI, POLIN ET AL.: 'Description of screen content coding technology proposal by MediaTek' JOINT COLLABORATIVE TEAM ON VIDEO CODING (JCT-VC) OF ITU-T SG 16 WP 3 AND ISO/IEC JTC 1/SC 29/WG 11 04 April 2014, page 12, XP030115920
- CHEN, YI-WEN ET AL.: 'Single color intra mode for screen content coding'' Joint Collaborative Team on Video Coding (JCT-VC) of ITU-T SG 16 WP 3 and ISO/IEC JTC 1/SC 29/WG 11' 04 April 2014, pages 1 - 2, XP030116003

## Description

### CROSS REFERENCE TO RELATED APPLICATIONS

The present invention claims priority to U.S. Provisional Patent Application, Serial No. 61/950,929, filed on March 11, 2014.

### TECHNICAL FIELD

The present invention relates to video coding having smooth contents. In particular, the present invention relates to depth coding or video using having smooth contents.

### BACKGROUND

Document KARSTEN MULLER ET AL: "3D High-Efficiency Video Coding for Multi-View Video and Depth Data", IEEE TRANSACTIONS ON IMAGE PROCESSING, IEEE SERVICE CENTER, PISCATAWAY, NJ, US, vol. 22, no. 9, 1 September 2013 (2013-09-01), pages 3366-3378, XP011519698, ISSN: 1057-7149, DOI: 10.1109/TIP.2013.2264820, and document MERKLE P ET AL: "3D video: Depth coding based on inter-component prediction of block partitions", 2012 PICTURE CODING SYMPOSIUM (PCS 2012) : KRAKOW, POLAND, 7 - 9 MAY 2012 ; [PROCEEDINGS], IEEE, PISCATAWAY, NJ, 7 May 2012 (2012-05-07), pages 149-152, XP032449850, DOI: 10.1109/PCS.2012.6213308 ISBN: 978-1-4577-2047-5, disclose intra coding of depth data using Depth Modeling Modes (DMM). A depth block is partitioned into two nonrectangular regions using a contour or a "wedgelet" (straight line). Each region is represented by a constant partition value (CPV). The two CPVs are predicted from the mean value of adjacent samples of neighboring left and top blocks and the differences between predicted and original CVPs are quantized and transmitted together with the partition information.

Three-dimensional (3D) television has been a technology trend in recent years that is targeted to bring viewers sensational viewing experience. Multi-view video is a technique to capture and render 3D video. The multi-view video is typically created by capturing a scene using multiple cameras simultaneously, where the multiple cameras are properly located so that each camera captures the scene from one viewpoint. The multi-view video with a large number of video sequences associated with the views represents a massive amount data. Accordingly, the multi-view video will require a large storage space to store and/or a high bandwidth to transmit. Therefore, multi-view video coding techniques have been developed in the field to reduce the required storage space and the transmission bandwidth. In three-dimensional and multi-view coding systems, the texture data as well as depth data are coded.

Currently, extensions of HEVC (High Efficiency Video Coding) are being developed, including range extensions (RExt) and 3D extensions. The range extension targets at non-4:2:0 color formats, such as 4:2:2 and 4:4:4, and video data with higher bit-depths such as 12, 14 and 16 bit-per-sample while the 3D extension targets at the coding of multi-view video with depth data.

One of the mostly likely applications utilizing RExt is screen sharing, over wired-connection or wireless. For video containing screen contents, coding tools have been developed by taking into consideration of the specific characteristics of screen-content and have been demonstrated to achieve significant gains in coding efficiency. Among them, the palette coding (a.k.a. major color based coding) techniques represent block of pixels using indices to the palette (major colors), and encode the palette and the indices by exploiting spatial redundancy.

In order to support the auto-stereoscopic multi-view display, multi-view video plus depth (MVD) format was introduced as a new 3D video format as described in JCT3V-G1005 (Zhang et al., Test Model 7 of 3D-HEVC and MV-HEVC, Joint Collaborative Team on 3D Video Coding Extension Development of ITU-T SG 16 WP 3 and ISO/IEC JTC 1/SC 29/WG 11 7th Meeting: San Jose, US, 11-17 Jan. 2014, Document: JCT3V-G1005). The MVD format consists of a texture image and its associated depth map. Unlike a texture image representing the luminance and chrominance information of an object, a depth map represents the distance between an object and a camera as a gray scale image. The depth map is generally employed as non-visual information for virtual view rendering. The MVD format enables the 3D display to generate virtual texture images for arbitrary views by using the depth image based rendering (DIBR) technique. Usually only a small number of the views are needed to be transmitted. The MVD format is being widely used as an input format for the 3D video coding.

The depth maps and screen content video typically show different signal characteristics compared to natural video data. In general, both depth maps and screen contents contain substantial smooth areas with similar pixel values. Furthermore, the pixels within the smooth areas often even share a same pixel value within an area.

It is desirable to develop techniques to further improve the coding efficiency through new prediction mode and syntax by taking into consideration of the characteristics of smooth areas in depth maps and screen contents.

### SUMMARY

The above-mentioned objectives are achieved by a method according to independent claim 1 and by an apparatus according to independent claim 12. The dependent claims define preferred embodiments thereof.

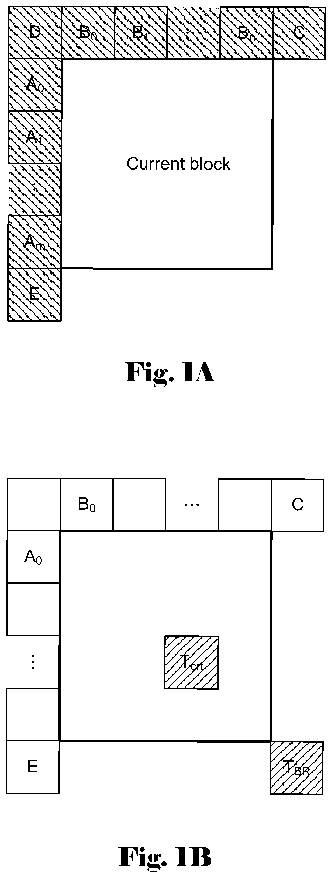

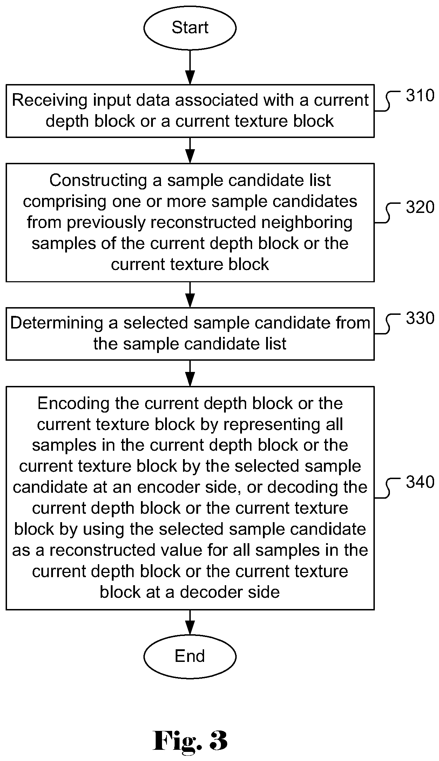

The present invention is defined in the appended claims. Enabling disclosure for the invention is found in figures 1A-C and 3 and the corresponding passages of the description. Any examples and embodiments of the description not falling within the scope of the claims do not form part of the invention and are provided for illustrative purposes only.

A method and apparatus of video coding including a Single Sample Mode are disclosed. Embodiments according to the present invention construct a sample candidate list comprising one or more sample candidates from previously reconstructed neighboring samples of the current depth block or the current texture block. A sample candidate is selected from the sample candidate list and the selected sample candidate is used as reconstructed samples for the current depth block or the current texture block. A sample candidate index indicating the selected sample candidate can be signaled at the encoder side or parsed at the decoder side. Alternatively, the sample candidate index can be derived implicitly.

The sample candidate list may include one or more sample candidates in a predefined order. The sample candidate list may be pruned before or after a sample candidate is inserted. The previously reconstructed neighboring samples may include spatial neighboring samples, temporal neighboring samples, inter-view neighboring samples, or any combination of them. The sample candidate list may further include at least one new sample candidate derived by adding an offset value to one existing sample candidate in the sample candidate list for the current texture block in screen-content video coding or for the current depth block in depth coding. The sample candidate list may also further include at least one default sample candidate corresponding to zero, a middle value of a maximum allowed sample value, the maximum allowed sample value, a maximum value of the reconstructed neighboring samples, a majority of the reconstructed neighboring samples, or a median of the previously reconstructed neighboring samples.

A control flag can be signaled in the current depth block or the current texture block to enable or disable said Single Sample Mode processing for the current depth block or the current texture block. The current depth block or the current texture block corresponds to a coding unit (CU). The target size of the sample candidate list can be signaled in a block level, slice level, picture level, sequence level or view level of a bitstream including coded data associated with the current depth block or the current texture block. The target size of the sample candidate list can also be determined implicitly according to an identical process at both the encoder side and the decoder side.

The target size of the sample candidate list can be fixed to a positive integer N and the target size of the sample candidate list is either pre-specified or signaled in a bitstream including coded data associated with the current depth block or the current texture block. If a current number of sample candidates is less than N, one or more additional sample candidates can be added to the sample candidate list. If a current number of sample candidates is larger than N, only first N sample candidates according to a priority order will be retained in the sample candidate list. The priority order can be pre-specified or adaptively derived according to statistics of coded sample index. In one example, the target size of the sample candidate list is fixed to 2. In this case, the first sample candidate corresponds to a middle sample of the column of spatial neighboring samples to a left side of the current block and the second sample candidate corresponds to the middle sample of the row of spatial neighboring samples on the top side of the current block. If a sample candidate in the sample candidate list is empty, the empty sample candidate can be replaced by a new sample candidate generated by adding an offset to an available sample candidate in the sample candidate list. If the current number of sample candidates is 1 or less, there is no need to signal the sample candidate index for identifying the selected sample candidate.

The Single Sample Mode may further comprise signaling residues between the selected sample candidate and the current depth block or the current texture block at the encoder side, or parsing the residues at the decoder side. The residual will be used in the decoding process of the current depth block or the current texture block. The residues can be coded using a single representative residual value or using a quad-tree process. Furthermore, a flag may be signaled to indicate whether the single representative residual value or the quad-tree process is used code the residues.

### BRIEF DESCRIPTION OF THE DRAWINGS

Fig. 1A illustrates an example of spatial neighboring samples that are used to derive sample candidates for Single Sample Mode coding.
Fig. 1B illustrates an example of temporal neighboring samples that are used to derive sample candidates for Single Sample Mode coding.
Fig. 1C illustrates an example of inter-view neighboring samples that are used to derive sample candidates for Single Sample Mode coding.
Fig. 2A illustrates an example of spatial neighboring samples that are used to derive sample candidates for Single Sample Mode coding.
Fig. 2B illustrates an example of sample candidate list comprising two spatial neighboring samples that are used to derive sample candidates for Single Sample Mode coding.
Fig. 3 illustrates an exemplary flowchart for a system incorporating Single Sample Mode coding according to an embodiment of the present invention.

### DETAILED DESCRIPTION

As mentioned above, the depth maps in a 3D system and the texture data corresponding to screen contents often include significant smooth areas. A coding method is disclosed herein to take the advantage of the smoothness in the depth maps and video data corresponding to screen contents to improve coding efficiency. Accordingly, a coding method of the present invention uses a single sample value to represent a smooth area of video data (either depth data of screen content data). The coding mode termed as *"Single Sample Mode"* or *"Single Sample Coding Mode"* in this disclosure. When a block is coded in the Single Sample Coding Mode, a whole current block is coded as a single pixel value. In other words, when a block coded in the Single Sample Coding Mode, the whole block is reconstructed by filling all pixels in the block with a single sample value (i.e., either a depth value or a pixel value). The pixel may correspond to any color format (e.g., YUV444, YUV420, YUV422, YUV400 or RGB).

The pixel value used for filling up the current block can be derived from previously decoded pixels. A sample candidate list is first constructed for a block coded as Single Sample Coding Mode. At the decoder side, the block is filled up with single value of the selected candidate from the sample candidate list. The detail of the proposed Single Sample Coding mode is described as follows. The Single Sample Mode can also be referred as "Single Depth Mode" when it is applied to depth coding. The Single Sample Mode can also be referred as "Single Color Mode" when it is applied to video coding of texture data.

### CONSTRUCTION OF SAMPLE CANDIDATE LIST

According to the present invention, a sample candidate list comprising one or more sample candidates for a block of video data coded in the Single Sample Coding Mode is constructed first. The size of the sample candidate list can be fixed or adaptive. For example, the size of the sample candidate list can be fixed to N, where N is a positive integer. While the size of the sample candidate list is fixed to N, the actual sample candidate list may be smaller since there may be redundancy in the candidate list and some sample candidates may not be available. Therefore, the intended candidate list size is referred as the "target size" in this disclosure. This target size may be different from the actual size of the candidate list.

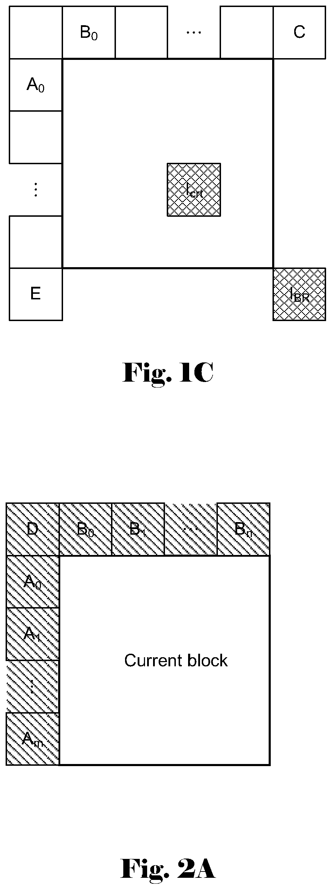

The sample candidate list is constructed by inserting one or more sample candidates in a predefined order into the sample candidate list. The sample candidates can be selected from the neighboring pixels of the current block (e.g., coding unit, CU). According to the picture type associated with the neighboring pixels, the sample candidates can be classified into different types. For example, Fig. 1A illustrates an example of spatial neighboring pixels that can be used to derive the sample candidates. Fig. 1B illustrates an example of temporal neighboring pixels that can be used to derive the sample candidates. Fig. 1C illustrates an example of inter-view neighboring pixels that can be used to derive the sample candidates. While specific examples are illustrated in Fig. 1A through Fig. 1C, the neighboring pixels are not limited to these examples. Any previously reconstructed pixels may be used to construct the sample candidate list.

### a. Spatial sample candidates

As shown in Fig. 1A, where each small square represents one pixel, the spatial neighboring pixels include those reconstructed pixels around the current block in the current picture (i.e., A₀- Aₘ, B₀- Bₙ, D, C and E). The spatial neighboring pixels are in the same picture as the current block. While the specific spatial neighboring pixels are shown, other spatial reconstructed pixels may also be used.

### b. Temporal sample candidates

As shown in Fig. 1B, the temporal neighboring pixels are those pixels co-located in the temporal reference picture of the current block. In other words, the temporal neighboring are within or neighboring to the corresponding block in a temporal reference picture. The specific exemplary temporal pixels shown in Fig. 1B correspond to a co-located temporal pixel at the lower-right side (T_{Ctr}) of the central block location and a co-located temporal pixel diagonally across from the lower-right corner pixel of the co-located block (i.e., T_{Br}). While the specific temporal neighboring pixels are shown, other temporal reconstructed pixels may also be used.

### c. Inter-view sample candidates

As shown in Fig. 1C, the inter-view neighboring pixels are those pixels in corresponding block location of the inter-view reference picture of the current block. The specific exemplary inter-view pixels shown in Fig. 1C correspond to a pixel at the lower-right side (I_{Ctr}) of the central block location of the corresponding inter-view block and a pixel location (i.e., I_{Br}) diagonally across from the lower-right corner pixel of the corresponding inter-view block. While the specific inter-view neighboring pixels are shown, other inter-view reconstructed pixels may also be used.

### d. Additional sample candidates

In addition to the spatial, temporal and inter-view candidates disclosed above, other samples may also be inserted into the sample candidate list. For example, the additional sample candidates may be a sample with a default value such as zero, middle value of the maximum allowed value, the maximum allowed value, the maximum of the neighboring pixels, the majority of the neighboring pixel, or the median of the neighboring pixels. Furthermore, the additional sample candidates may be a modified sample based on the sample derived from the neighboring sample. For example, the additional sample candidate can be derived by adding a constant value to one of the neighboring sample candidate. In another example, the additional candidates can be derived from a look up table that stores the top N majority pixel values. The look up table can be designed based on the statistics of video data at different levels such as the sequence level, picture level, slice level, coding block level (e.g. coding unit in HEVC) or prediction block level (e.g. prediction unit in HEVC). When the actual size of the candidate list is smaller than the target size, additional sample candidates can be added to the sample candidate list.

### PRUNING PROCESS OF SAMPLE CANDIDATE LIST

An optional redundancy pruning process can be applied to the candidate list in order to improve the coding efficiency. For example, a sample candidate will not be inserted into the candidate list if it is identical to any of the previously derived sample candidates. To reduce the complexity, a partial redundancy process may be applied, where the redundancy checking is only applied to some designated candidates. Moreover, the redundancy pruning process can be applied to each color channel (e.g., Y, Cr, Cr, R, G, B or depth) independently or jointly. After pruning, the size of the candidate list may be smaller than the target size. Additional sample candidates can be added to candidate list.

### RESIDUAL SIGNALING OF SINGLE SAMPLE MODE

While a block of depth data or texture data coded in the Single Sample Mode can be reconstructed by filling up all pixels in the block by a selected sample, the prediction residual can be selectively signaled as an optional process. When residual is signaled for the Single Sample Mode, the conventional residual quad-tree transform and residual signaling in HEVC can be used to signal the residual. Alternatively, a single delta value can be signaled for the entire Single Sample Mode coded block as a representative residual value.

### SIGNALING OF SINGLE SAMPLE MODE

One flag can be used to signal the enabling/disabling of the Single Sample Coding Mode. This flag can be signaled in the coding unit (CU) level to indicate the enabling/disabling of the Single Sample Coding Mode for the entire CU. This flag can also be signaled in the prediction unit (PU) level to indicate the enabling/disabling of the Single Sample Coding Mode for the PU.

High level syntax can also be signaled in the slice header, picture parameter set (PPS), sequence parameter set (SPS), video parameter set (VPS) to enable or disable the Single Sample Mode for the corresponding entire slice, picture, sequence or video data associated with the video coding. The size of the sample candidate list could also be signaled in the bitstream in different levels (e.g., slice header, PPS, SPS or VPS).

For each Single Sample Mode coded block, a sample index can be signaled to indicate the candidate selected from the sample candidate list for reconstructing the Single Sample Mode coded block. The truncated unary or any other coding methods can be applied for binarization of the sample index. Furthermore, context-depending entropy coding can be applied to the binarized sample index. For example, the first bin of the binary codeword of the sample index is context coded and the rest bins are bypass coded.

When the size of the sample candidate list is smaller than or equal to one, the signaling of sample index can be omitted.

As mention before, residual can be optionally signaled for the Single Sample Mode coded block. If the optional residual signaling is used, a flag may be further signaled to indicate whether a single delta DC or normal residual is used for the Single Sample Mode coded block. When it is a normal block with residual, a conventional residual signaling syntax based on quad-tree coding as used in HEVC can be utilized to signal the residual. In a single delta DC is used for the residual, only a delta DC is signaled for the Single Sample Mode coded block.

### RESTRICTION OF SINGLE SAMPLE MODE

The Single Sample Mode can be selectively applied according to the information associated with the coding block such as the size of the coding block or the partitioning type of the coding block. For example, the Single Sample Mode is only applied to the 32x32 and 64x64 CUs (blocks). In another example, the Single Sample Mode is only applied to the CU with partitioning type 2Nx2N.

### ENCODER DECISION OF SINGLE SAMPLE MODE

The decision regarding whether Single Sample Mode is enabled or disabled can be made for a current picture/slice based on information associated with the underlying video data. Two examples are illustrated as follows:
1. Encoder can gather statistics of the pixels in the current picture. If the smooth area of current picture is larger than a threshold, the Single Sample Mode is enabled for current picture/slice; otherwise, the Single Sample Mode is disabled for current picture/slice. There are various known techniques of smooth area detection in the literature. For example, the histogram of the pixels in the current picture can be used as a measurement of smoothness detection. If the total number of the top N majority pixel values is larger than a threshold, it implies that the majority pixels are concentrated at limited values. This is an indication of smoothness in the picture and the Single Sample Mode is enabled for current picture/Slice. Otherwise, the Single Sample Mode is disabled.
2. The pixel statistic can be gathered based on the previously reconstructed picture instead of the current picture. For example, the statistics can be gathered from the previously reconstructed picture with temporal layer equal to current temporal layer minus one. An example of the detailed algorithm is shown below.

```
              If current temporal layer =0
              {
              }enable Single Sample Mode;
              Else
              {
               If the Single Sample Mode enabling ratio in the previously reconstructed picture
                           with (current temporal layer -1) > Threshold
                   enabled Single Sample Mode;
                Else
              }disable Single Sample Mode;
```

### SINGLE SAMPLE MODE VS INTRA PREDICTION MODE

The Single Sample Mode can be viewed as an Intra prediction mode, particularly the Intra DC mode, so that the following Intra coded blocks can form Intra prediction using the current Single Sample coded block as previously reconstructed data.

In a non-I-Slice (e.g. P-Slice or B-Slice), the Single Sample Mode may include the temporal or inter-view candidates in the sample candidate list. In an I-Slice, the Single Sample Mode can only include the spatial candidates in the sample candidate list.

### EXAMPLES OF SINGLE SAMPLE MODE

In one example, the sample candidate list with fixed size for depth coding is constructed by inserting only the spatial neighboring depth pixels according to a predefined order. For example, the pre-defined order may correspond to A₀, ..., Aₘ, B₀, ..., Bₙ and D as shown in Fig. 2A. A full redundancy checking can be applied during the construction of the depth sample candidate list. Default sample candidate (e.g., a middle depth value) can be used to fill the candidate list once the list still has empty entries.

In another example, a simplified pruning process is used, where the candidate Aₘ is only compared to the candidate A₀ in the redundancy check; the candidate Bₙ is only compared to the candidate B₀ in the redundancy check.

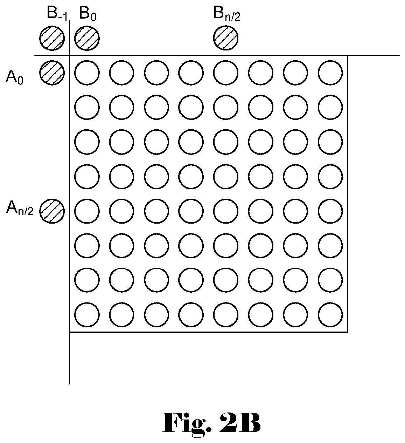

In yet another example, the size of sample candidate list is fixed to 2 for depth coding. In other words, two sample candidates are included in the sample candidate list. The sample candidate list is constructed using a first sample candidate in a middle of left neighboring column samples of the current block. If there are n samples in the left neighboring column samples, the middle sample corresponds to A_{n/2} as shown in Fig. 2B. After the first sample candidate is inserted, a second sample candidate in a middle of top neighboring row samples of the current block is inserted. If there are *n* samples in the top neighboring row samples, the middle sample corresponds to B_{n/2} as shown in Fig. 2B.

A full redundancy checking can be applied during the construction of the pixel sample candidate list. Default sample candidate can be used to fill the candidate list. For color video coding with screen contents, the default sample may have individual default colors (e.g., three default values for three color components).

The performance of a video coding system incorporating Single Sample Mode according to an embodiment is compared to that of a conventional system based on HTM-11.0 (High Efficiency Video Coding, HEVC Test Model). The embodiment uses Single Sample Mode for the depth data, where the sample candidate list is derived from the spatial neighboring samples as shown in Fig. 2B and no residual is signaled. The performance comparison is based on different sets of test data listed in the first column. The test results of the system incorporating an embodiment of the present invention under the common test conditions (CTC) and under the all-Intra (AI) test conditions are shown in Table 1 and Table 2, respectively. As shown in the tables, the Single Sample Mode can achieve 0.29% and 0.34% BD-rate saving in both CTC and AI test conditions respectively.

**Table 1**

| | Video 0 | Video 1 | Video 2 | Video PSNR/video bitrate | Video PSNR/total bitrate | Synth PSNR/total bitrate | Enc time | Dec time | Ren time |
|---|---|---|---|---|---|---|---|---|---|
| Balloons | 0.00% | -0.06% | 0.08% | 0.00% | -0.02% | -0.13% | 99.8% | 98.6% | 98.1% |
| Kendo | 0.00% | -0.01% | 0.07% | 0.01% | -0.12% | -0.39% | 104.0% | 89.3% | 100.5% |
| Newspapercc | 0.00% | -0.07% | -0.06% | -0.01% | -0.02% | -0.25% | 101.9% | 106.8% | 101.6% |
| GhostTownFly | 0.00% | -0.06% | 0.13% | 0.02% | -0.23% | -0.76% | 100.2% | 101.1% | 101.9% |
| PoznanHall2 | 0.00% | 0.07% | 0.00% | 0.00% | -0.05% | -0.13% | 100.8% | 99.9% | 99.1% |
| PoznanStreet | 0.00% | 0.30% | 0.19% | 0.06% | -0.03% | -0.10% | 102.9% | 94.3% | 97.7% |
| UndoDancer | 0.00% | 0.06% | 0.07% | 0.03% | 0.05% | -0.18% | 103.5% | 97.6% | 101.0% |
| Shark | 0.00% | -0.13% | 0.07% | -0.01% | -0.12% | -0.39% | 100.4% | 98.1% | 102.1% |
| 1024x768 | 0.00% | -0.04% | 0.03% | 0.00% | -0.05% | -0.26% | 101.9% | 98.2% | 100.0% |
| 1920x1088 | 0.00% | 0.05% | 0.09% | 0.02% | -0.08% | -0.31% | 101.6% | 98.2% | 100.3% |
| **average** | **0.00%** | **0.01%** | **0.07%** | **0.01%** | **-0.07%** | **-0.29%** | **1101.7%** | **98.2%** | **100.2%** |

**Table 2**

| | Video 0 | Video 1 | Video 2 | Video PSNR/video bitrate | Video PSNR/total bitrate | Synth PSNR/total bitrate | Enc time | Dec time | Ren time |
|---|---|---|---|---|---|---|---|---|---|
| Balloons | 0.00% | 0.00% | 0.00% | 0.00% | -0.11% | -0.23% | 99.4% | 99.7% | 100.3% |
| Kendo | 0.00% | 0.00% | 0.00% | 0.00% | -0.12% | -0.28% | 98.3% | 100.5% | 95.9% |
| Newspapercc | 0.00% | 0.00% | 0.00% | 0.00% | -0.13% | -0.29% | 99.1% | 93.7% | 98.1% |
| GhostTownFly | 0.00% | 0.00% | 0.00% | 0.00% | -0.52% | -0.74% | 100.5% | 93.3% | 101.0% |
| PoznanHall2 | 0.00% | 0.00% | 0.00% | 0.00% | -0.21 % | -0.25% | 99.2% | 94.2% | 98.1% |
| PoznanStreet | 0.00% | 0.00% | 0.00% | 0.00% | -0.22% | -0.33% | 99.3% | 93.2% | 98.9% |
| UndoDancer | 0.00% | 0.00% | 0.00% | 0.00% | 0.01% | -0.01 % | 99.0% | 95.3% | 102.7% |
| Shark | 0.00% | 0.00% | 0.00% | 0.00% | -0.29% | -0.56% | 98.9% | 98.5% | 99.1% |
| 1024x768 | 0.00% | 0.00% | 0.00% | 0.00% | -0.12% | -0.27% | 98.9% | 98.0% | 98.1% |
| 1920x1088 | 0.00% | 0.00% | 0.00% | 0.00% | -0.25% | -0.38% | 99.4% | 94.9% | 100.0% |
| **average** | **0.00%** | **0.00%** | **0.00%** | **0.00%** | **-0.20%** | **-0.34%** | **99.2%** | **96.0%** | **99.3%** |

Fig. 3 illustrates an exemplary flowchart of Single Sample Mode coding for depth data or texture data according to an embodiment of the present invention. The system receives input data associated with a current depth block or a current texture block as shown in step 310. For encoding, the input data associated with the current depth block or the current texture block corresponds to the depth samples or pixel values to be coded. For decoding, the input data associated with the current depth block or the current texture block corresponds to the coded depth data or coded video pixel data to be decoded. The input data associated with the current depth block may be retrieved from memory (e.g., computer memory, buffer (RAM or DRAM) or other media) or from a processor. A sample candidate list comprising one or more sample candidates is constructed from previously reconstructed neighboring samples of the current depth block or the current texture block as shown in step 320. A selected sample candidate is determined from the sample candidate list as shown in step 330. The current depth block or the current texture block is encoded by representing all samples in the current depth block or the current texture block by the selected sample candidate at an encoder side, or reconstructed by using the selected sample candidate as a reconstructed value for all samples in the current depth block or the current texture block at a decoder side as shown in step 340.

The above description is presented to enable a person of ordinary skill in the art to practice the present invention as provided in the context of a particular application and its requirement. In the above detailed description, various specific details are illustrated in order to provide a thorough understanding of the present invention.

Embodiments as described above may be implemented in various hardware, software codes, or a combination of both. For example, an embodiment can be a circuit integrated into a video compression chip or program code integrated into video compression software to perform the processing described herein. An embodiment may also be program code to be executed on a Digital Signal Processor (DSP) to perform the processing described herein. An embodiment may also involve a number of functions to be performed by a computer processor, a digital signal processor, a microprocessor, or field programmable gate array (FPGA). These processors can be configured to perform particular tasks by executing machine-readable software code or firmware code that defines the particular methods. The software code or firmware code may be developed in different programming languages and different formats or styles. The software code may also be compiled for different target platforms.

The described examples are to be considered in all respects only as illustrative and not restrictive. The scope of the invention is therefore, indicated by the appended claims rather than by the foregoing description.

## Claims

1. A method of video encoding or decoding for a block of depth data or texture data, the method comprising:
receiving (310) input data associated with a current depth block or a current texture block;
if the current depth block or the current texture block is coded in Single Sample Mode, applying Single Sample Mode processing to the current depth block or the current texture block, wherein said Single Sample Mode processing comprises:
constructing (320) a sample candidate list comprising one or more sample candidates (A₀, ..., Aₘ, B₀, ..., Bₙ, D, C, E, T_{Ctr}, T_{BR}, I_{Ctr}, I_{BR}) from previously reconstructed neighboring samples (A₀, ..., Aₘ, B₀, ..., Bₙ, D, C, E, T_{Ctr}, T_{BR}, I_{Ctr}, I_{BR}) of the current depth block or the current texture block;
determining (330) a selected sample candidate from the sample candidate list; and
encoding (340) the current depth block or the current texture block by representing all samples in the current depth block or the current texture block by the value of the selected sample candidate at an encoder side, or decoding (340) the current depth block or the current texture block by filling all samples in the current depth block or the current texture block with the value of the selected sample candidate at a decoder side;
wherein a sample candidate index indicating the selected sample candidate is either signaled at the encoder side or parsed at the decoder side or it is derived implicitly.

2. The method of Claim 1, wherein said constructing (320) the sample candidate list comprises inserting one or more sample candidates (A₀, ..., Aₘ, B₀, ..., Bₙ, D, C, E, T_{Ctr}, T_{BR} I_{Ctr}, I_{BR}) in a predefined order into the sample candidate list, or
wherein said constructing (320) the sample candidate list comprises selectively pruning the sample candidate list before or after one sample candidate (A₀, ..., Aₘ, B₀, ..., Bₙ, D, C, E, T_{Ctr}, T_{BR}, I_{Ctr}, I_{BR}) is inserted.

3. The method of Claim 1, wherein the previously reconstructed neighboring samples (A₀, ..., Aₘ, B₀, ..., Bₙ, D, C, E, T_{Ctr}, T_{BR}, I_{Ctr}, I_{BR}) include spatial neighboring samples (A₀, ..., Aₘ, B₀, ..., Bₙ, D, C, E), temporal neighboring samples (T_{Ctr}, T_{BR}), inter-view neighboring samples (I_{Ctr}, I_{BR}), or any combination thereof.

4. The method of Claim 1, wherein the sample candidate list further comprises at least one new sample candidate derived by adding an offset value to one existing sample candidate (A₀, ..., Aₘ, B₀, ..., Bₙ, D, C, E, T_{Ctr}, T_{BR}, I_{Ctr}, I_{BR}) in the sample candidate list for the current texture block in screen-content video coding or for the current depth block in depth coding.

5. The method of Claim 1, wherein the sample candidate list further comprises at least one default sample candidate corresponding to zero, a middle value of a maximum allowed sample value, the maximum allowed sample value, a maximum value of the reconstructed neighboring samples (A₀, ..., Aₘ, B₀, ..., Bₙ, D, C, E, T_{Ctr}, T_{BR}, I_{Ctr}, I_{BR}), a majority of the reconstructed neighboring samples (A₀, ..., Aₘ, B₀, ..., Bₙ, D, C, E, T_{Ctr}, T_{BR}, I_{Ctr}, I_{BR}), or a median of the previously reconstructed neighboring samples (A₀, ..., Aₘ, B₀, ..., Bₙ, D, C, E, T_{Ctr}, T_{BR}, I_{Ctr,} I_{BR}).

6. The method of Claim 1, wherein a control flag is signaled in the current depth block or the current texture block to enable or disable said Single Sample Mode processing for the current depth block or the current texture block, and wherein the current depth block or the current texture block corresponds to a coding unit, CU.

7. The method of Claim 1, wherein a target size of the sample candidate list is signaled in a block level, slice level, picture level, sequence level or view level of a bitstream including coded data associated with the current depth block or the current texture block, or wherein a target size of the sample candidate list is determined implicitly according to an identical process at both the encoder side and the decoder side.

8. The method of Claim 1, wherein a target size of the sample candidate list is fixed to a positive integer N and the target size of the sample candidate list is either pre-specified or signaled in a bitstream including coded data associated with the current depth block or the current texture block.

9. The method of Claim 8, wherein if a current number of sample candidates (A₀, ..., Aₘ, B₀, ..., Bₙ, D, C, E, T_{Ctr}, T_{BR}, I_{Ctr}, I_{BR}) is less than N, one or more additional sample candidates are added to the sample candidate list; or
wherein if a current number of sample candidates (A₀, ..., Aₘ, B₀, ..., Bₙ, D, C, E, T_{Ctr}, T_{BR}, I_{Ctr}, I_{BR}) is larger than N, only first N sample candidates according to a priority order are retained in the sample candidate list,
wherein preferably the priority order is pre-specified or adaptively derived according to statistics of coded sample index.

10. The method of Claim 8, wherein if a current number of sample candidates is 1 or less, no sample candidate index is signaled for identifying the selected sample candidate.

11. The method of Claim 1, further comprising signaling residues between the selected sample candidate and the current depth block or the current texture block at the encoder side, or parsing the residues and including the residual in said decoding the current depth block or the current texture block at the decoder side,
wherein preferably the residues are coded using a single representative residual value or using a quad-tree process,
wherein further preferably a flag is signaled to indicate whether the single representative residual value or the quad-tree process is used for coding the residues.

12. An apparatus for video encoding or decoding of a block of depth data or texture data in a video coding system, the apparatus comprising one or more electronic circuits configured to:
receive input data associated with a current depth block or a current texture block;
if the current depth block or the current texture block is coded in Single Sample Mode:
construct a sample candidate list comprising one or more sample candidates (A₀, ..., Aₘ, B₀, ..., Bₙ, D, C, E, T_{Ctr}, T_{BR}, I_{Ctr}, I_{BR}) from previously reconstructed neighboring samples (A₀, ..., Aₘ, B₀, ..., Bₙ, D, C, E, T_{Ctr}, T_{BR}, I_{Ctr}, I_{BR}) of the current depth block or the current texture block;
determine a selected sample candidate from the sample candidate list; and
encode the current depth block or the current texture block by representing all samples in the current depth block or the current texture block by the value of the selected sample candidate at an encoder side, or decode the current depth block or the current texture block by filling all samples in the current depth block or the current texture block with the value of the selected sample candidate at a decoder side;
wherein a sample candidate index indicating the selected sample candidate is either signaled at the encoder side or parsed at the decoder side or it is derived implicitly.

## Patentansprüche

1. Verfahren einer Videocodierung oder -decodierung für einer Block von Tiefendaten oder Texturdaten, wobei das Verfahren umfasst:
Empfangen (310) von Eingangsdaten, die mit einem aktuellen Tiefenblock oder einem aktuellen Texturblock verknüpft sind;
wenn der aktuelle Tiefenblock oder der aktuelle Texturblock in einem Einzel-Sample-Modus codiert ist, Anwenden einer Einzel-Sample-Modus-Verarbeitung auf den aktuellen Tiefenblock oder den aktuellen Texturblock, wobei die Einzel-Sample-Modus-Verarbeitung umfasst:
Konstruieren (320) einer Sample-Kandidatenliste, die einen oder mehrere Sample-Kandidaten (A₀, ..., Aₘ, B₀, ..., Bₙ, D, C, E, T_{Ctr}, T_{BR}, I_{Ctr}, I_{BR}) von vorhergehend rekonstruierten benachbarten Samples (A₀, ..., Aₘ, B₀, ..., Bₙ, D, C, E, T_{Ctr}, T_{BR}, I_{Ctr,} I_{BR}) des aktuellen Tiefenblocks oder des aktuellen Texturblocks aufweist;
Bestimmen (330) eines ausgewählten Sample-Kandidaten von der Sample-Kandidatenliste; und
Codieren (340) des aktuellen Tiefenblocks oder des aktuellen Texturblocks durch ein Repräsentieren aller Samples in dem aktuellen Tiefenblock oder dem aktuellen Texturblock durch den Wert des ausgewählten Sample-Kandidaten auf einer Codiererseite, oder Decodieren (340) des aktuellen Tiefenblocks oder des aktuellen Texturblocks durch ein Auffüllen aller Samples in dem aktuellen Tiefenblock oder dem aktuellen Texturblock mit dem Wert des ausgewählten Sample-Kandidaten auf einer Decodiererseite;
wobei ein Sample-Kandidaten-Index, der den ausgewählten Sample-Kandidaten anzeigt, entweder auf der Codiererseite signalisiert oder auf der Decodiererseite analysiert wird oder implizit hergeleitet wird.

2. Verfahren gemäß Anspruch 1, wobei das Konstruieren (320) der Sample-Kandidatenliste ein Einfügen eines oder mehrerer Sample-Kandidaten (A₀, ..., Aₘ, B₀, ..., Bₙ, D, C, E, T_{Ctr}, T_{BR}, I_{Ctr,} I_{BR}) in einer vordefinierten Reihenfolge in die Sample-Kandidatenliste umfasst, oder
wobei das Konstruieren (320) der Sample-Kandidatenliste ein selektives Beschneiden der Sample-Kandidatenliste, bevor oder nachdem ein Sample-Kandidat (A₀, ..., Aₘ, B₀, ..., Bₙ, D, C, E, T_{Ctr}, T_{BR}, I_{Ctr}, I_{BR}) eingefügt wird, umfasst.

3. Verfahren gemäß Anspruch 1, wobei die vorhergehend rekonstruierten benachbarten Samples (A₀, ..., Aₘ, B₀, ..., Bₙ, D, C, E, T_{Ctr}, T_{BR}, I_{Ctr,} I_{BR}) räumlich benachbarte Samples (A₀, ..., Aₘ, B₀, ..., Bₙ, D, C, E), zeitlich benachbarte Samples (T_{Ctr}, T_{BR}), Zwischenansichtbenachbarte Samples (I_{Ctr}, I_{BR}) oder eine Kombination davon umfassen.

4. Verfahren gemäß Anspruch 1, wobei die Sample-Kandidatenliste weiter mindestens einen neuen Sample-Kandidaten aufweist, der durch ein Addieren eines Versatzwerts zu einem existierenden Sample-Kandidaten (A₀, ..., Aₘ, B₀, ..., Bₙ, D, C, E, T_{Ctr}, T_{BR}, I_{Ctr,} I_{BR}) in der Sample-Kandidatenliste für den aktuellen Texturblock in einer Bildschirminhalt-Videocodierung oder für einen aktuellen Tiefenblock in einer Tiefencodierung hergeleitet wird.

5. Verfahren gemäß Anspruch 1, wobei die Sample-Kandidatenliste weiter mindestens einen Vorgabe-Sample-Kandidaten aufweist, der zu null, einem Mittelwert eines maximal erlaubten Sample-Werts, dem maximal erlaubten Sample-Wert, einem maximalen Wert der rekonstruierten benachbarten Samples (A₀, ..., Aₘ, B₀, ..., Bₙ, D, C, E, T_{Ctr}, T_{BR}, I_{Ctr}, I_{BR}), einer Mehrheit der rekonstruierten benachbarten Samples (A₀, ..., Aₘ, B₀, ..., Bₙ, D, C, E, T_{Ctr}, T_{BR}, I_{Ctr}, I_{BR}) oder einem Median der vorhergehend rekonstruierten benachbarten Samples (A₀, ..., Aₘ, B₀, ..., Bₙ, D, C, E, T_{Ctr}, T_{BR}, I_{Ctr}, I_{BR}) korrespondiert.

6. Verfahren gemäß Anspruch 1, wobei ein Steuerungskennzeichen in dem aktuellen Tiefenblock oder dem aktuellen Texturblock signalisiert wird, um die Einzel-Sample-Modus-Verarbeitung für den aktuellen Tiefenblock oder den aktuellen Texturblock zu aktivieren oder zu deaktivieren, und wobei der aktuelle Tiefenblock oder der aktuelle Texturblock zu einer Codierungseinheit, CU, korrespondiert.

7. Verfahren gemäß Anspruch 1, wobei eine Zielgröße der Sample-Kandidatenliste in einer Blockebene, einer Slice-Ebene, einer Bildebene, einer Sequenzebene oder einer Ansichtsebene eines Bitstroms signalisiert wird, der codierte Daten aufweist, die mit dem aktuellen Tiefenblock oder dem aktuellen Texturblock verknüpft sind, oder wobei eine Zielgröße der Sample-Kandidatenliste implizit gemäß einem identischen Prozess sowohl auf der Codiererseite als auch auf der Decodiererseite bestimmt wird.

8. Verfahren gemäß Anspruch 1, wobei eine Zielgröße der Sample-Kandidatenliste auf eine positive ganze Zahl N festgelegt wird und die Zielgröße der Sample-Kandidatenliste entweder vorspezifiziert oder in einem Bitstrom signalisiert wird, der codierte Daten aufweist, die mit dem aktuellen Tiefenblock oder dem aktuellen Texturblock verknüpft sind.

9. Verfahren gemäß Anspruch 8, wobei, wenn eine aktuelle Anzahl von Sample-Kandidaten (A₀, ..., Aₘ, B₀, ..., Bₙ, D, C, E, T_{Ctr}, T_{BR}, I_{Ctr,} I_{BR}) geringer ist als N, ein oder mehrere zusätzliche Sample-Kandidaten zu der Sample-Kandidaten hinzugefügt werden; oder
wobei, wenn eine aktuelle Anzahl von Sample-Kandidaten (A₀, ..., Aₘ, B₀, ..., Bₙ, D, C, E, T_{Ctr}, T_{BR}, I_{Ctr,} I_{BR}) größer ist als N, nur erste N Sample-Kandidaten gemäß einer Prioritätsreihenfolge in der Sample-Kandidatenliste behalten werden,
wobei vorzugsweise die Prioritätsreihenfolge vorspezifiziert oder adaptiv gemäß Statistiken eines codierten Sample-Index hergeleitet wird.

10. Verfahren gemäß Anspruch 8, wobei, wenn eine aktuelle Anzahl von Sample-Kandidaten 1 oder weniger ist, kein Sample-Kandidaten-Index zum Identifizieren des ausgewählten Sample-Kandidaten signalisiert wird.

11. Verfahren gemäß Anspruch 1, weiter umfassend ein Signalisieren von Restbeträgen zwischen dem ausgewählten Sample-Kandidaten und dem aktuellen Tiefenblock oder dem aktuellen Texturblock auf der Codiererseite, oder ein Analysieren der Restbeträge und Einschließen des Restbetrags in dem Decodieren des aktuellen Tiefenblocks oder des aktuellen Texturblocks auf der Decodiererseite,
wobei vorzugsweise die Restbeträge unter Verwendung eines einzelnen repräsentativen Restbetragswerts unter Verwendung eines Vierfachbaumprozesses codiert werden,
wobei weiter vorzugsweise ein Kennzeichen signalisiert wird, um anzuzeigen, ob der einzelne repräsentative Restbetragswert oder der Vierfachbaumprozess zum Codieren der Restbeträge verwendet wird.

12. Vorrichtung für eine Videocodierung oder -decodierung eines Blocks von Tiefendaten oder Texturdaten in einem Videocodierungssystem, wobei die Vorrichtung eine oder mehrere Elektronikschaltungen aufweist, die eingerichtet ist zum:
Empfangen von Eingangsdaten, die mit einem aktuellen Tiefenblock oder einem aktuellen Texturblock verknüpft sind;
wenn der aktuelle Tiefenblock oder der aktuelle Texturblock in einem Einzel-Sample-Modus codiert ist:
Konstruieren einer Sample-Kandidatenliste, die einen oder mehrere Sample-Kandidaten (A₀, ..., Aₘ, B₀, ..., Bₙ, D, C, E, T_{Ctr}, T_{BR}, I_{Ctr}, I_{BR}) von vorhergehend rekonstruierten benachbarten Samples (A₀, ..., Aₘ, B₀, ..., Bₙ, D, C, E, T_{Ctr}, T_{BR}, I_{Ctr}, I_{BR}) des aktuellen Tiefenblocks oder des aktuellen Texturblocks aufweist;
Bestimmen eines ausgewählten Sample-Kandidaten von der Sample-Kandidatenliste; und
Codieren des aktuellen Tiefenblocks oder des aktuellen Texturblocks durch ein Repräsentieren aller Samples in dem aktuellen Tiefenblock oder dem aktuellen Texturblock durch den Wert des ausgewählten Sample-Kandidaten auf einer Codiererseite, oder Decodieren des aktuellen Tiefenblocks oder des aktuellen Texturblocks durch ein Auffüllen aller Samples in dem aktuellen Tiefenblock oder dem aktuellen Texturblock mit dem Wert des ausgewählten Sample-Kandidaten auf einer Decodiererseite;
wobei ein Sample-Kandidaten-Index, der den ausgewählten Sample-Kandidaten anzeigt, entweder auf der Codiererseite signalisiert oder auf der Decodiererseite analysiert wird oder implizit hergeleitet wird.

## Revendications

1. Procédé de codage ou de décodage vidéo pour un bloc de données de profondeur ou de données de texture, le procédé comprenant le fait :
de recevoir (310) des données d'entrée associées à un bloc de profondeur actuel ou à un bloc de texture actuel ;
si le bloc de profondeur actuel ou le bloc de texture actuel est codé dans un Mode Mono-échantillon, d'appliquer un traitement de Mode Mono-échantillon au bloc de profondeur actuel ou au bloc de texture actuel, où ledit traitement de Mode Mono-échantillon comprend le fait :
de construire (320) une liste de candidats échantillons comprenant un ou plusieurs candidat(s) échantillon(s) (A₀, ..., Aₘ, B₀, ..., Bₙ, D, C, E, T_{Ctr}, T_{BR}, I_{Ctr}, I_{BR}) à partir d'échantillons voisins précédemment reconstruits (A₀, ..., Aₘ, B₀, ..., Bₙ, D, C, E, T_{Ctr}, T_{BR}, I_{Ctr}, I_{BR}) du bloc de profondeur actuel ou du bloc de texture actuel ;
de déterminer (330) un candidat échantillon sélectionné à partir de la liste de candidats échantillons ; et
de coder (340) le bloc de profondeur actuel ou le bloc de texture actuel en représentant tous les échantillons dans le bloc de profondeur actuel ou le bloc de texture actuel par la valeur du candidat échantillon sélectionné à un côté codeur, ou de décoder (340) le bloc de profondeur actuel ou le bloc de texture actuel en remplissant tous les échantillons dans le bloc de profondeur actuel ou le bloc de texture actuel avec la valeur du candidat échantillon sélectionné à un côté décodeur ;
dans lequel un indice de candidat échantillon indiquant le candidat échantillon sélectionné est soit signalé au côté codeur soit analysé au côté décodeur soit il est dérivé implicitement.

2. Procédé de la revendication 1, dans lequel ladite construction (320) de la liste de candidats échantillons comprend le fait
d'insérer un ou plusieurs candidat(s) échantillon(s) (A₀, ..., Aₘ, B₀, ..., Bₙ, D, C, E, T_{Ctr}, T_{BR}, I_{Ctr}, I_{BR}) dans un ordre prédéfini dans la liste de candidats échantillons, ou
dans lequel ladite construction (320) de la liste de candidats échantillons comprend le fait
d'élaguer sélectivement la liste de candidats échantillons avant ou après l'insertion d'un candidat échantillon (A₀, ..., Aₘ, B₀, ..., Bₙ, D, C, E, T_{Ctr}, T_{BR}, I_{Ctr}, I_{BR}).

3. Procédé de la revendication 1, dans lequel les échantillons voisins précédemment reconstruits (A₀, ..., Aₘ, B₀, ..., Bₙ, D, C, E, T_{Ctr}, T_{BR}, I_{Ctr}, I_{BR}) comportent des échantillons voisins spatiaux (A₀, ..., Aₘ, B₀, ..., Bₙ, D, C, E), des échantillons voisins temporels (T_{Ctr}, T_{BR}), des échantillons voisins intervues (I_{Ctr}, I_{BR}), ou toute combinaison de ceux-ci.

4. Procédé de la revendication 1, dans lequel la liste de candidats échantillons comprend en outre au moins un nouveau candidat échantillon dérivé en ajoutant une valeur de décalage à un candidat échantillon existant (A₀, ..., Aₘ, B₀, ..., Bₙ, D, C, E, T_{Ctr}, T_{BR}, I_{Ctr}, I_{BR}) dans la liste de candidats échantillons pour le bloc de texture actuel dans le codage vidéo de contenu d'écran ou pour le bloc de profondeur actuel dans le codage de profondeur.

5. Procédé de la revendication 1, dans lequel la liste de candidats échantillons comprend en outre au moins un candidat échantillon par défaut correspondant à zéro, une valeur moyenne d'une valeur d'échantillon maximale autorisée, la valeur d'échantillon maximale autorisée, une valeur maximale des échantillons voisins reconstruits (A₀, ..., Aₘ, B₀, ..., Bₙ, D, C, E, T_{Ctr}, T_{BR}, I_{Ctr}, I_{BR}), la majorité des échantillons voisins reconstruits (A₀, ..., Aₘ, B₀, ..., Bₙ, D, C, E, T_{Ctr}, T_{BR}, I_{Ctr}, I_{BR}), ou une médiane des échantillons voisins précédemment reconstruits (A₀, ..., Aₘ, B₀, ..., Bₙ, D, C, E, T_{Ctr}, T_{BR}, I_{Ctr}, I_{BR}).

6. Procédé de la revendication 1, dans lequel un indicateur de commande est signalé dans le bloc de profondeur actuel ou le bloc de texture actuel pour activer ou désactiver ledit traitement de Mode Mono-échantillon pour le bloc de profondeur actuel ou le bloc de texture actuel, et dans lequel le bloc de profondeur actuel ou le bloc de texture actuel correspond à une unité de codage, CU.

7. Procédé de la revendication 1, dans lequel une taille cible de la liste de candidats échantillons est signalée dans un niveau de bloc, un niveau de tranche, un niveau d'image, un niveau de séquence ou un niveau de vue d'un train binaire comportant des données codées associées au bloc de profondeur actuel ou au bloc de texture actuel, ou dans lequel une taille cible de la liste de candidats échantillons est déterminée implicitement selon un procédé identique à la fois au côté codeur et au côté décodeur.

8. Procédé de la revendication 1, dans lequel une taille cible de la liste de candidats échantillons est fixée à un nombre entier positif N et la taille cible de la liste de candidats échantillons est soit pré-spécifiée soit signalée dans un train binaire comportant des données codées associées au bloc de profondeur actuel ou au bloc de texture actuel.

9. Procédé de la revendication 8, dans lequel si un nombre actuel de candidats échantillons (A₀, ..., Aₘ, B₀, ..., Bₙ, D, C, E, T_{Ctr}, T_{BR}, I_{Ctr}, I_{BR}) est inférieur à N, un ou plusieurs candidat(s) échantillon(s) supplémentaire(s) est/sont ajouté(s) à la liste de candidats échantillons ; ou
dans lequel si un nombre actuel de candidats échantillons (A₀, ..., Aₘ, B₀, ..., Bₙ, D, C, E, T_{Ctr}, T_{BR}, I_{Ctr}, I_{BR}) est supérieur à N, seuls les N premiers candidats échantillons selon un ordre de priorité sont retenus dans la liste de candidats échantillons,
dans lequel, de préférence, l'ordre de priorité est pré-spécifié ou dérivé de manière adaptative selon des statistiques d'indice d'échantillon codé.

10. Procédé de la revendication 8, dans lequel si un nombre actuel de candidats échantillons est inférieur ou égal à 1, aucun indice de candidat échantillon n'est signalé pour identifier le candidat échantillon sélectionné.

11. Procédé de la revendication 1, comprenant en outre la signalisation de résidus entre le candidat échantillon sélectionné et le bloc de profondeur actuel ou le bloc de texture actuel au côté codeur, ou l'analyse des résidus et l'inclusion du résidu dans ledit décodage du bloc de profondeur actuel ou du bloc de texture actuel au côté décodeur,
dans lequel, de préférence, les résidus sont codés en utilisant une valeur résiduelle représentative unique ou en utilisant un procédé quaternaire,
dans lequel, en outre, de préférence un indicateur est signalé pour indiquer si la valeur résiduelle représentative unique ou le procédé quaternaire est utilisé(e) pour coder les résidus.

12. Appareil pour le codage ou le décodage vidéo d'un bloc de données de profondeur ou de données de texture dans un système de codage vidéo, l'appareil comprenant un ou plusieurs circuit(s) électronique(s) configuré(s) pour :
recevoir des données d'entrée associées à un bloc de profondeur actuel ou à un bloc de texture actuel ;
si le bloc de profondeur actuel ou le bloc de texture actuel est codé dans un Mode Mono-échantillon :
construire une liste de candidats échantillons comprenant un ou plusieurs candidat(s) échantillon(s) (A₀, ..., Aₘ, B₀, ..., Bₙ, D, C, E, T_{Ctr}, T_{BR}, I_{Ct r}, I_{BR}) à partir d'échantillons voisins précédemment reconstruits (A₀, ..., Aₘ, B₀, ..., Bₙ, D, C, E, T_{Ctr}, T_{BR}, I_{Ctr}, I_{BR}) du bloc de profondeur actuel ou du bloc de texture actuel ;
déterminer un candidat échantillon sélectionné à partir de la liste de candidats échantillons ; et
coder le bloc de profondeur actuel ou le bloc de texture actuel en représentant tous les échantillons dans le bloc de profondeur actuel ou le bloc de texture actuel par la valeur du candidat échantillon sélectionné à un côté codeur, ou décoder le bloc de profondeur actuel ou le bloc de texture actuel en remplissant tous les échantillons dans le bloc de profondeur actuel ou le bloc de texture actuel avec la valeur du candidat échantillon sélectionné à un côté décodeur ;
dans lequel un indice de candidat échantillon indiquant le candidat échantillon sélectionné est soit signalé au côté codeur soit analysé au côté décodeur soit il est dérivé implicitement.
